# EUROPÄISCHE PATENTSCHRIFT

(11) **EP 3 143 198 B1**
(45) Veröffentlichungstag und Bekanntmachung des Hinweises auf die Patenterteilung: **13.06.2018**
(21) Anmeldenummer: 15732543.2
(22) Anmeldetag: 17.04.2015
(51) Int. Cl.: D21D 5/16, B07B 1/18, B07B 1/46

(54) **VERFAHREN ZUR HERSTELLUNG EINER SIEBVORRICHTUNG**
METHOD FOR MANUFACTURING A SCREENING APPARATUS
PROCÉDÉ DE FABRICATION D'UN APPAREIL DE TAMISAGE

(30) Priorität: 15.05.2014 DE 102014209200
(43) Veröffentlichungstag der Anmeldung: 22.03.2017
(73) Patentinhaber: Voith Patent GmbH, 89522 Heidenheim (DE)
(72) Erfinder: BURGER, Ralf, 89558 Böhmenkirch (DE); ZAVORNIK, Oliver, 89537 Giengen / Brz. (DE); ZAVORNIK, Ivica, 89537 Giengen / Brz. (DE); BRETTSCHNEIDER, Werner, 88287 Grünkraut (DE)
(86) Internationale Anmeldenummer: PCT/EP2015/058389
(87) Internationale Veröffentlichungsnummer: WO 2015/172969

(56) Entgegenhaltungen:
- EP-A2- 1 825 933
- WO-A1-03/028846
- WO-A1-2009/062287

## Beschreibung

Die vorliegende Erfindung betrifft ein Verfahren zur Herstellung einer rotationssymmetrischen, insbesondere zylindrischen Siebvorrichtung mit einer Vielzahl von Profilstäben, bei dem erste leistenartige Stabhalter erzeugt werden, deren Form von der späteren Ringform in der fertigen Siebvorrichtung abweicht und die mit randoffenen Aussparungen versehen sind, in die die Profilstäbe einsetzbar sind, die Profilstäbe parallel zueinander in die randoffenen Aussparungen der ersten Stabhalter eingesetzt werden, aus den mit den Profilstäben versehenen ersten Stabhaltern durch Umbiegen Ringe erzeugt werden, die Profilstäbe mit diesem Umbiegen durch die sich verengenden Aussparungen in diesen Aussparungen eingeklemmt werden, und die ersten Stabhalter nach dem Umbiegen an ihren beiden Stoßenden fest miteinander verbunden werden.

Die Erfindung betrifft ferner eine durch ein solches Verfahren hergestellte Siebvorrichtung, insbesondere Siebkorb, für einen beispielsweise in der Papier erzeugenden Industrie einsetzbaren Drucksortierer sowie eine Siebvorrichtung, insbesondere Siebkorb, für einen beispielsweise in der Papier erzeugenden Industrie einsetzbaren Drucksortierer, mit einer Vielzahl von Profilstäben, die parallel zueinander klemmend in randoffene Aussparungen von zu Ringen gebogenen ersten leistenartigen Stabhaltern eingesetzt sind, deren beide Stoßenden fest miteinander verbunden sind.

Siebvorrichtungen der genannten Art werden beispielsweise zum Sortieren von Faserstoffsuspensionen eingesetzt, wie es in Drucksortierern der Papier erzeugenden Industrie durchgeführt wird. Dabei sollen die in der Suspension enthaltenen Fasern durch das Sieb hindurchtreten, während die nicht gewünschten festen Bestandteile an dem Spalt abgewiesen und aus der Siebvorrichtung wieder herausgeleitet werden.

Dadurch, dass die Öffnungen eine im Wesentlichen längliche Form besitzen, also Schlitze oder Spalten sind, werden faserige Teilchen selbst dann leichter durchgelassen, wenn beide Arten in ähnlicher Größenordnung vorliegen. Mit einer derartigen Sortiertechnologie wird daher eine sehr effektive Ausscheidung von nicht faserigen Störstoffen aus Faserstoffsuspensionen ermöglicht. Denkbar ist auch ein Einsatz zur Trennung unterschiedlicher Faserbestandteile, einer sogenannten Faserfraktionierung. Voraussetzung ist allerdings eine hohe Präzision der Schlitzform auf der ganzen Siebfläche. Bei hohen Anforderungen werden zumeist zylindrische Siebvorrichtungen in Form von sogenannten Siebkörben verwendet.

Die Siebvorrichtungen können entweder für eine zentrifugale Fahrweise mit von innen nach außen gerichteter Suspensionsströmung und am Innenrand der Stabhalter eingesetzten Profilstäben oder für eine zentripetale Fahrweise mit von außen nach innen gerichteter Suspensionsströmung und am Außenrand der Stabhalter eingesetzten Profilstäben ausgeführt sein. Dabei ist bei Siebvorrichtungen für eine zentrifugale Fahrweise mit außen angeordneten Stabhaltern und innen angeordneten Profilstäben ist der Krümmungsradius der Stabhalter beim Einführen der Profilstäbe größer als der Krümmungsradius des Siebzylinders. Anschließend wird der Krümmungsradius der Stabhalter zum Verklemmen der Profilstäbe verringert. Bei Siebvorrichtungen für eine zentripetale Fahrweise mit innen angeordneten Stabhaltern und außen angeordneten Profilstäben ist der Krümmungsradius der Stabhalter beim Einführen der Profilstäbe kleiner als der Krümmungsradius des Siebzylinders. Anschließend wird der Krümmungsradius der Stabhalter zum Verklemmen der Profilstäbe vergrößert.

Dabei werden zur Herstellung von Siebvorrichtungen für eine zentrifugale Fahrweise üblicherweise zunächst gerade Stabhalter erzeugt und die Profilstäbe in diese Stabhalter eingesetzt. Anschließend werden die Stabhalter mit den eingesetzten Profilstäben zu einer offenen C-Form vorgebogen. Schließlich werden aus den Stabhaltern geschlossene Ringe gebildet und deren beide Stoßenden fest miteinander verbunden. Ein Verfahren dieser Art ist beispielsweise in der DE 39 27 748 A1 beschrieben.

Dagegen werden zur Herstellung von Siebvorrichtungen für eine zentripetale Fahrweise üblicherweise zunächst aus mehreren Segmenten bestehende gebogene Stabhalter erzeugt, deren Krümmungsradius kleiner ist als der der fertigen Siebvorrichtung. Nachdem die Profilstäbe in diese Stabhalter eingesetzt wurden, werden aus diesen Ringe erzeugt, wobei der Krümmungsradius der Stabhalter durch Umformen vergrößert wird, wodurch sich die Aussparungen wieder verengen und die Profilstäbe eingeklemmt werden. Anschließend werden die beiden Stoßenden der Stabhalter wieder fest miteinander verbunden. Ein entsprechendes Verfahren ist beispielsweise in der DE 10 2006 008 172 A1 beschrieben.

Es hat sich gezeigt, dass die bisher üblichen für eine zentrifugale Fahrweise ausgeführten Siebvorrichtungen mit lediglich geklemmten Profilstäben nur begrenzt und in Abhängigkeit vom jeweils verwendeten Rotor bzw. der jeweiligen Anwendung einsetzbar sind. Die Profilstäbe wurden daher mit den ringartigen Stabhaltern verschweißt. Beim Betrieb in den Sortierern kam es jedoch bei einer Vielzahl dieser Siebvorrichtungen teilweise innerhalb kürzester Zeit zu Brüchen, was im Schweißprozess begründet ist.

Bei für eine zentripetale Fahrweise ausgeführten Siebvorrichtungen, bei denen die Profilstäbe ebenfalls mit den ringförmigen Stabhaltern verschweißt wurden, traten dieselben Probleme wie bei den für eine zentrifugale Fahrweise ausgeführten Siebvorrichtungen auf. Bei einer zunächst nur geklemmten, über eine Vorbiegung erreichten Version wurde keine ausreichende Klemmung erreicht. Auch bei eine solchen Version kam es zu Brüchen. Ein weiteres Problem bei den bisher bekannten Siebvorrichtungen ergibt sich im Zusammenhang mit der Anbindung der Endringe der Siebvorrichtungen bzw. Siebkörbe, und zwar unabhängig davon, ob die Profilstäbe mit den Stabhaltern verschweißt werden oder nicht. So wirkt die Hauptbelastung beim Betrieb des Sortierers am stärksten im Bereich der Endring-Schweißnaht, da hier der Kraftumlenkpunkt mit der höchsten Spannungsbelastung vorliegt. Auch dies stellt eine permanente Schwachstelle dar, was immer wieder dazu führt, dass die Endringe an dieser Stelle von den Siebzylindern abbrechen. Die Ursache hierfür ist ebenfalls im Schweißprozess begründet. EP1825933 offenbart ein Verfahren entsprechend dem Oberbegriff des Anpruchs 1. In der WO2009/062287 wird hierzu eine Lösung beschrieben, bei der die Stabhalter in axialer und in Umfangsrichtung aus mehreren Segementen zusammengesetzt sind.
Alternativ beschreibt die US 2011/0005 981 A1 eine zylindrische Siebvorrichtung, bei der zu den ersten leistenartigen Stabhaltern zumindest ein weiterer leistenartiger Stabhalter mit randoffenen Ausnehmungen eingesetzt wird.
Bei diesen bisher bekannten Verfahren und Siebvorrichtungen bringen die beschriebenen Stabilitätsprobleme Einschränkungen beim Einsatz für bestimmte Rotoren, Rotordrehzahlen und Ausführungsvarianten mit sich.
Der Erfindung liegt die Aufgabe zugrunde, Verfahren sowie Siebvorrichtungen der eingangs genannten Art anzugeben, mit denen die zuvor erwähnten Probleme beseitigt sind. Dabei sollen mit den betreffenden Verfahren auf möglichst einfache und entsprechend kostengünstige Weise auch ohne das Erfordernis eines Verschweißens der Profilstäbe mit den Stabhaltern Siebvorrichtungen, insbesondere Siebkörbe, möglichst hoher Festigkeit herstellbar sein. Die betreffenden Siebvorrichtungen sollen bei möglichst optimaler Festigkeit und entsprechend höherer Bruchsicherheit und Haltbarkeit insbesondere auch vielseitiger einsetzbar sein. Zudem soll insbesondere auch die Bruchgefahr im Bereich der Schweißstellen zwischen den Endringen und dem Profilstabverband so weit wie möglich minimiert werden.

Die Aufgaben werden erfindungsgemäß durch ein Verfahren mit den Merkmalen des Anspruchs 1, ein Verfahren mit den Merkmalen des Anspruchs 14, eine durch das erfindungsgemäße Verfahren hergestellte Siebvorrichtung nach Anspruch 16, eine Siebvorrichtung mit den Merkmalen des Anspruchs 17 bzw. eine Siebvorrichtung mit den Merkmalen des Anspruchs 18 gelöst. Bevorzugte Ausgestaltungen der erfindungsgemäßen Verfahren sowie bevorzugte Ausführungsformen der erfindungsgemäßen Siebvorrichtungen ergeben sich aus den Unteransprüchen, der folgenden Beschreibung sowie der beigefügten Zeichnung.

Ausgehend von dem Verfahren der eingangs genannten Art zeichnet sich eine erste Alternative eines erfindungsgemäßen Verfahrens dadurch aus, dass zusätzlich zu den ersten leistenartigen Stabhaltern jeweils zumindest ein weiterer leistenartiger Stabhalter mit randoffenen Aussparungen erzeugt wird, dessen Form von der späteren Ringform in der fertigen Siebvorrichtung abweicht und dessen in Radialrichtung der späteren Ringform gemessene Höhe geringer ist als die Höhe des jeweiligen ersten Stabhalters, aus den ersten leistenartigen Stabhaltern und den diesen zugeordneten weiteren leistenartigen Stabhaltern Stabhalterpakete aus jeweils einem ersten leistenartigen Stabhalter und wenigstens einem in Axialrichtung der fertigen Siebvorrichtung unmittelbar angrenzenden oder in einem Abstand vorgesehenen weiteren leistenartigen Stabhalter gebildet werden, die Profilstäbe parallel zueinander in die randoffenen Aussparungen der Stabhalterpakete eingesetzt werden, mit dem Umbiegen der ersten Stabhalter die weiteren Stabhalter mit umgebogen und dadurch die Profilstäbe durch die sich verengenden Aussparungen der weiteren Stabhalter auch in den Aussparungen dieser weiteren Stabhalter eingeklemmt werden und die Stabhalterpakete nach dem Umbiegen an ihren beiden Stoßenden fest miteinander verbunden werden.

Ein solches Verfahren ist sowohl zur Herstellung von Siebvorrichtungen für die zentrifugale Fahrweise als auch zur Herstellung von Siebvorrichtungen für die zentripetale Fahrweise geeignet.

Indem die Stabhalter erfindungsgemäß zumindest zweifach bzw. zumindest doppelt mit unterschiedlicher Höhe vorgesehen werden, wird eine versetzte Klemmung erreicht, womit die Siebvorrichtungen eine höhere Festigkeit erhalten, länger haltbar sind und nicht mehr so schnell brechen. Auch ohne das Erfordernis eines Verschweißens der Profilstäbe mit den Stabhaltern sowie ohne ein Weich- oder

Hartlöten, Kleben oder dergleichen wird allein durch ein Einklemmen der Profilstäbe in den Aussparungen der Stabhalter eine sehr hohe Festigkeit der Siebvorrichtungen bzw. Siebkörbe erreicht. Die Siebvorrichtungen sind entsprechend vielseitiger bzw. für eine größere Anzahl von Anwendungsfällen einsetzbar, ohne dafür die zuvor genannten Risiken wie insbesondere Brüche oder dergleichen in Kauf nehmen zu müssen.

Dabei kann beispielsweise zumindest ein Stabhalterpaket aus einem ersten Stabhalter und einem weiteren Stabhalter gebildet werden. Es kann jedoch beispielsweise auch zumindest ein Stabhalterpaket aus einem ersten Stabhalter und zwei weiteren Stabhaltern gebildet werden. Dabei besitzen sämtliche weiteren Stabhalter eines jeweiligen Stabhalterpakets jeweils eine geringere Höhe als der erste Stabhalter des betreffenden Stabhalterpakets.

Die Stabhalter eines jeweiligen Stabhalterpakets werden in Axialrichtung der herzustellenden Siebvorrichtung axial unmittelbar oder in einem Abstand zueinander aufeinanderfolgend aneinandergelegt, woraufhin die Siebmatte wie beschrieben mit den Profilstäben bestückt werden kann. Infolge der geringeren Höhe der weiteren Stabhalter kann die so entstandene Siebmatte beispielsweise auf einem 3-Walzen-Walzwerk mit für Stabhalter eingebrachten Nuten wie bisher vorgerundet werden. Die Siebmatte passt aufgrund der geringeren Höhe der weiteren Stabhalter insbesondere auch in bisher verwendete Hydraulikzylinder, mittels derer die Enden der höheren ersten Stabhalter hydraulisch gehalten, unter Spannung zusammengezogen und geschweißt werden können. Dabei werden die weiteren Stabhalter geringerer Höhe "mitgeschleppt".

Durch die dabei entstehende Längendifferenz durch die unterschiedlichen neutralen Fasern treten unterschiedliche Klemmungen und ein "Verspannungseffekt" am Stabhalterpaket auf. Auch zwischen den beispielsweise lasergeschnittenen Stabhalteraussparungen und den Profilstäben entstehen unterschiedlich große Längenveränderungen, was zu einem gegenseitigen Verspannen führt. Durch diesen Effekt und die zusätzliche größere Stabhalterdicke entsteht eine extrem stabile Siebvorrichtung bzw. ein extrem stabiler Siebkorb mit hoher Klemmkraft.

Die leistenartigen Stabhalter können beispielsweise durch Laserschneiden erzeugt werden. Dabei werden die jeweiligen weiteren Stabhalter wie bereits erwähnt mit einer geringeren Höhe ausgeführt als die ersten Stabhalter. Die weiteren Stabhalter sind demzufolge während der weiteren Bearbeitung beispielsweise mittels einer kombinierten Biege-Schweißmaschine nicht hinderlich und passen problemlos in die betreffenden Vorrichtungen.

In bestimmten Fällen kann es von Vorteil sein, wenn die Stabhalter wenigstens eines Stabhalterpakets aus demselben Material erzeugt werden.

Grundsätzlich ist jedoch auch denkbar, die Stabhalter wenigstens eines Stabhalterpakets zumindest teilweise aus unterschiedlichem Material zu erzeugen. Dabei können die Stabhalter wenigstens eines Stabhalterpakets vorteilhafterweise zumindest teilweise aus unterschiedlichem Material erzeugt werden, um den Stabhaltern zumindest teilweise unterschiedliche Dehnungs-, Zugfestigkeits- und/oder Reibungseigenschaften zu verleihen.

In bestimmten Fällen ist zudem von Vorteil, wenn die Stabhalter wenigstens eines Stabhalterpakets zumindest teilweise eine unterschiedliche in Axialrichtung der fertigen Siebvorrichtung gemessene Dicke besitzen. Grundsätzlich können sie jedoch auch gleich dick sein.

Wie bereits erwähnt, können die ersten leistenartigen Stabhalter in der zuvor beschriebenen Weise mittels Biegevorrichtungen zu Ringen umgebogen werden und die den ersten leistenartigen Stabhaltern zugeordneten weiteren leistenartigen Stabhalter über in die randoffenen Aussparungen der Stabhalterpakete eingesetzten Profilstäbe mitgeschleppt und damit ebenfalls zu Ringen umgebogen werden. Dabei können die ersten leistenartigen Stabhalter beim Umbiegen zu Ringen insbesondere in die Biegevorrichtungen eingeklemmt werden. An ihren beiden Stoßenden werden die Stabhalterpakete schließlich durch Schweißen miteinander verbunden.

Dabei kann das Umbiegen der Stabhalterpakete und das Verbinden der beiden Stoßenden der Stabhalterpakete in derselben Maschine, insbesondere einer kombinierten Biege- und Schweißmaschine, durchgeführt werden. Auf die sich hierbei bei der Herstellung von Siebvorrichtungen für eine zentrifugale Fahrweise und für Siebvorrichtungen für eine zentripetale Fahrweise ergebende unterschiedliche Vorgehensweise wurde eingangs eingegangen. Grundsätzlich ist das erfindungsgemäße Verfahren zur Herstellung beider Arten von Siebvorrichtungen bzw. Siebkörben geeignet. Dabei kann eine jeweilige Siebvorrichtung beispielsweise zwei oder auch mehrere in Axialrichtung der Siebvorrichtung einen Abstand voneinander aufweisende erfindungsgemäße Stabhalterpakete umfassen.

Weiter ausgehend von dem Verfahren der eingangs genannten Art zeichnet sich eine weitere Alternative eines erfindungsgemäßen Verfahrens dadurch aus, dass zusätzlich zu zwei in der fertigen Siebvorrichtung im Bereich eines jeweiligen stirnseitigen Endringes der Siebvorrichtung zu positionierenden ersten leistenartigen Stabhaltern jeweils ein weiterer leistenartiger Stabhalter mit randoffenen Aussparungen erzeugt wird, dessen Form von der späteren Ringform in der fertigen Siebvorrichtung abweicht und dessen in Radialrichtung der späteren Ringform gemessene Höhe geringer ist als die Höhe des jeweiligen ersten Stabhalters, aus den betreffenden ersten leistenartigen Stabhaltern und den diesen zugeordneten weiteren leistenartigen Stabhaltern Stabhalterpakete aus jeweils einem ersten leistenartigen Stabhalter und einem in Axialrichtung der fertigen Siebvorrichtung unmittelbar angrenzenden, zwischen dem ersten leistenartigen Stabhalter und dem betreffenden Endring angeordneten weiteren leistenartigen Stabhalter gebildet werden, die Profilstäbe parallel zueinander in die randoffenen Aussparungen der Stabhalterpakete eingesetzt werden, mit dem Umbiegen der ersten Stabhalter die weiteren Stabhalter mit umgebogen und dadurch die Profilstäbe durch die sich verengenden Aussparungen der weiteren Stabhalter auch in den Aussparungen dieser weiteren Stabhalter eingeklemmt werden, die Stabhalterpakete nach dem Umbiegen an ihren beiden Stoßenden fest miteinander verbunden werden, der weitere Stabhalter eines jeweiligen Stabhalterpakets anschließend spielfrei in eine Vertiefung des betreffenden Endringes gefügt und mit dem Endring verschweißt wird, und der erste Stabhalter eines jeweiligen Stabhalterpakets in Anlage an der inneren Stirnfläche des betreffenden Endringes im Bereich seines von den Profilstäben abgewandten Randes mit dem Endring verschweißt wird.

Dabei kann insbesondere zur Herstellung einer zentrifugal betreibbaren Siebvorrichtung mit am Innenrand der Stabhalter eingesetzten Profilstäben der weitere Stabhalter eines jeweiligen Stabhalterpakets vorteilhafterweise über eine Schweißnaht im Bereich des Innendurchmessers des betreffenden Endringes und der Stabhalter eines jeweiligen Stabhalterpakets über eine Dichtnaht im Bereich seines Außendurchmessers mit dem betreffenden Endring verschweißt werden.

Damit gelangt die Wärmeeinflusszone der Hauptschweißnaht tiefer in den jeweiligen Endring, und die Verformungskraft der Profilstäbe wirkt im Betrieb im Sortierer verstärkt auf die ungeschweißte Klemmstelle im Stabhalterpaket bzw. am ersten Stabhalter größerer bzw. normaler Höhe. Die Schweißnaht wird dadurch deutlich entlastet, womit auch die Kerbwirkung infolge einer deutlich geringeren Belastung weniger zum Tragen kommt. Es wird somit insbesondere die Bruchgefahr im Bereich der Schweißstellen zwischen den Endringen und dem Profilstabverband auf ein Minimum reduziert.

Diese zweite Alternative eines erfindungsgemäßen Verfahrens kann mit der ersten Alternative eines erfindungsgemäßen Verfahrens kombiniert oder auch getrennt angewendet werden. Das heißt, die erfindungsgemäßen Stabhalterpakete im Bereich der Endringe gemäß der zweiten Alternative eines erfindungsgemäßen Verfahrens sind auch bereits für sich betrachtet mit Vorteil anwendbar, ohne dass dazu zwingend auch weitere erfindungsgemäße Stabhalterpakete ausgebildet werden müssen. Wie bereits erwähnt, ist mit Vorteil jedoch auch eine Kombination der beiden Alternativen des erfindungsgemäßen Verfahrens denkbar.

Beide Varianten des erfindungsgemäßen Verfahrens sind sowohl zur Herstellung von Siebvorrichtungen für eine zentrifugale Fahrweise als auch zur Herstellung von Siebvorrichtungen für eine zentripetale Fahrweise geeignet. Dabei können zur Herstellung von Siebvorrichtungen für eine zentripetale Fahrweise ebenfalls Siebkörbe nach dem "Schleppleisten"-Prinzip auf einer Biege-Schweißmaschine hergestellt werden. Dabei werden die aus Segmenten zusammengesetzten Profilstäbe zunächst kleineren Krümmungsradius wie zuvor erwähnt und beispielsweise in der DE 10 2006 008 172 A1 beschriebenen aufgebogen. Auch hier werden durch erste und weitere Stabhalter wieder Stabhalterpakete gebildet, wobei die weiteren Stabhalter beim Vorbiegen der ersten Stabhalter wieder entsprechend "mitgeschleppt" werden. Die Stabhalterpakete können insbesondere wieder auf einer Biege-Schweißmaschine gespannt und verschweißt werden. Es tritt derselbe Effekt des Verspannens durch die entstehende Längendifferenz bzw. die unterschiedlichen neutralen Fasern auf, wie dies zuvor beschrieben wurde. Die Endringanbindung kann für Siebvorrichtungen für eine zentrifugale Fahrweise und Siebvorrichtungen für eine zentripetale Fahrweise in der beschriebenen Weise analog ausgeführt werden.

Eine erste Alternative einer erfindungsgemäßen Siebvorrichtung, insbesondere Siebkorb, für einen in der Papier erzeugenden Industrie einsetzbaren Drucksortierer zeichnet sich dadurch aus, dass sie durch ein erfindungsgemäßes Verfahren hergestellt wird.

Die Vorteile einer solchen erfindungsgemäßen Siebvorrichtung ergeben sich aus den im Zusammenhang mit dem erfindungsgemäßen Verfahren bereits genannten Vorteilen.

Ausgehend von einer Siebvorrichtung der eingangs genannten Art, das heißt einer Siebvorrichtung, insbesondere Siebkorb, für einen in der Papier erzeugenden Industrie einsetzbaren Drucksortierer, mit einer Vielzahl von Profilstäben, die parallel zueinander klemmend in randoffene Aussparungen von zu Ringen gebogenen ersten leistenartigen Stabhaltern eingesetzt sind, deren beide Stoßenden fest miteinander verbunden sind, zeichnet sich eine weitere Alternative einer erfindungsgemäßen Siebvorrichtung dadurch aus, dass zusätzlich zu den ersten Stabhaltern jeweils zumindest ein weiterer zu einem Ring gebogener leistenartiger Stabhalter mit randoffenen Aussparungen vorgesehen ist, dessen radiale Höhe geringer ist als die Höhe des jeweiligen ersten Stabhalters, die ersten Stabhalter und die diesen zugeordneten weiteren Stabhalter Stabhalterpakete aus jeweils einem ersten Stabhalter und wenigstens einem in Axialrichtung der fertigen Siebvorrichtung unmittelbar angrenzenden oder in einem Abstand vorgesehenen weiteren Stabhalter bilden, die Profilstäbe parallel zueinander klemmend in die randoffenen Aussparungen der Stabhalterpakete eingesetzt sind, wobei die Profilstäbe auch in den Aussparungen der weiteren Stabhalter eingeklemmt sind, und die umgebogenen Stabhalterpakete an ihren beiden Stoßenden fest miteinander verbunden sind. Grundsätzlich kann auch eine solche Siebvorrichtung insbesondere wieder durch ein erfindungsgemäßes Verfahren hergestellt sein, was jedoch nicht zwingend ist. Die Vorteile einer solchen erfindungsgemäßen Siebvorrichtung ergeben sich unmittelbar wieder aus den im Zusammenhang mit dem betreffenden erfindungsgemäßen Verfahren bereits genannten Vorteilen.

Weiter ausgehend von der Siebvorrichtung der eingangs genannten Art, das heißt einer Siebvorrichtung, insbesondere Siebkorb, für einen in der Papier erzeugenden Industrie einsetzbaren Drucksortierer, mit einer Vielzahl von Profilstäben, die parallel zueinander klemmend in randoffene Aussparungen von zu Ringen gebogenen ersten leistenartigen Stabhaltern eingesetzt sind, deren beide Stoßenden fest miteinander verbunden sind, zeichnet sich eine weitere Alternative einer erfindungsgemäßen Siebvorrichtung dadurch aus, dass zusätzlich zu zwei im Bereich eines jeweiligen stirnseitigen Endringes der Siebvorrichtung vorgesehenen ersten Stabhaltern jeweils ein weiterer zu einem Ring gebogener Stabhalter mit randoffenen Aussparungen vorgesehen ist, dessen radiale Höhe geringer ist als die Höhe des jeweiligen ersten Stabhalters, die betreffenden ersten Stabhalter und die diesen zugeordneten weiteren Stabhalter Stabhalterpakete aus jeweils einem ersten Stabhalter und einem in Axialrichtung unmittelbar angrenzenden oder in einem gewissen Abstand vorgesehenen, zwischen dem ersten Stabhalter und dem betreffenden Endring angeordneten weiteren Stabhalter bilden, die Profilstäbe parallel zueinander klemmend in die randoffenen Aussparungen der Stabhalterpakete eingesetzt sind, wobei die Profilstäbe auch in die verengten Aussparungen der zu Ringen gebogenen weiteren Stabhalter eingeklemmt sind, die umgebogenen Stabhalterpakete an ihren beiden Stoßenden fest miteinander verbunden sind, der weitere Stabhalter eines jeweiligen Stabhalterpakets spielfrei in eine Vertiefung des betreffenden Endringes gefügt und mit dem Endring verschweißt ist, und der erste Stabhalter eines jeweiligen Stabhalterpakets an der inneren Stirnfläche des betreffenden Endringes anliegt und im Bereich seines von den Profilstäben abgewandten Randes mit dem Endring verschweißt ist.

Dabei kann diese Variante einer erfindungsgemäßen Siebvorrichtung in Kombination mit wenigstens einer der zuvor genannten Varianten einer erfindungsgemäßen Siebvorrichtung oder für sich betrachtet vorgesehen sein. Die Vorteile dieser erfindungsgemäßen Siebvorrichtung ergeben sich wieder aus den im Zusammenhang mit dem betreffenden erfindungsgemäßen Verfahren bereits erwähnten Vorteilen.

Insbesondere in dem Fall, dass die Siebvorrichtung für eine zentrifugale Fahrweise bestimmt ist, das heißt die Suspensionsströmung von innen nach außen gerichtet ist und die Profilstäbe am Innenrand der Stabhalter eingesetzt sind, ist bevorzugt der weitere Stabhalter eines jeweiligen Stabhalterpakets über eine Schweißnaht im Bereich des Innendurchmessers des betreffenden Endringes und der erste Stabhalter eines jeweiligen Stabhalterpakets über eine Dichtnaht im Bereich seines Außendurchmessers mit dem betreffenden Endring verschweißt.

Auch die Vorteile dieser bevorzugten Ausführungsform ergeben sich wieder aus den im Zusammenhang mit dem betreffenden Verfahren bereits erwähnten Vorteilen.

Zumindest ein Stabhalterpaket einer jeweiligen Variante einer erfindungsgemäßen Siebvorrichtung kann insbesondere aus einem ersten Stabhalter und einem weiteren Stabhalter oder aus einem ersten Stabhalter und zwei weiteren Stabhaltern gebildet sein, wobei die weiteren Stabhalter eine geringere Höhe als der erste Stabhalter besitzen. Die leistenartigen Stabhalter können beispielsweise durch Laserschneiden erzeugt sein. Die Stabhalter wenigstens eines Stabhalterpakets können aus demselben Material oder zumindest teilweise auch aus unterschiedlichem Material erzeugt sein. Im letzteren Fall können die Stabhalter wenigstens eines Stabhalterpakets zumindest teilweise aus unterschiedlichem Material erzeugt sein und damit zumindest teilweise unterschiedliche Dehnungs-, Zugfestigkeits- und/oder Reibungseigenschaften besitzen.

Die Stabhalter wenigstens eines Stabhalterpakets einer jeweiligen Variante einer erfindungsgemäßen Siebvorrichtung können dieselbe in Axialrichtung der Siebvorrichtung gemessene Dicke oder zumindest teilweise auch eine unterschiedliche axiale Dicke besitzen. An ihren beiden Stoßenden können die Stabhalterpakete insbesondere durch Schweißen miteinander verbunden sein.

Zwischen die Profilstäbe können beispielsweise auch Lochleisten mit zylindrischen und/oder konischen Sieböffnungen eingesetzt werden.

Die Erfindung wird im Folgenden anhand von Ausführungsbeispielen unter Bezugnahme auf die Zeichnung näher beschrieben; in dieser zeigen:
- Fig. 1: eine schematische Teildarstellung einer nach einem erfindungsgemäßen Verfahren hergestellten beispielhaften Ausführungsform einer erfindungsgemäßen Siebvorrichtung mit zwischen den Endringen vorgesehenen Stabhalterpaketen und
- Fig. 2: eine schematische Teildarstellung einer nach einem erfindungsgemäßen Verfahren hergestellten beispielhaften Ausführungsform einer erfindungsgemäßen Siebvorrichtung mit im Bereich der Endringe vorgesehenen Stabhalterpaketen.

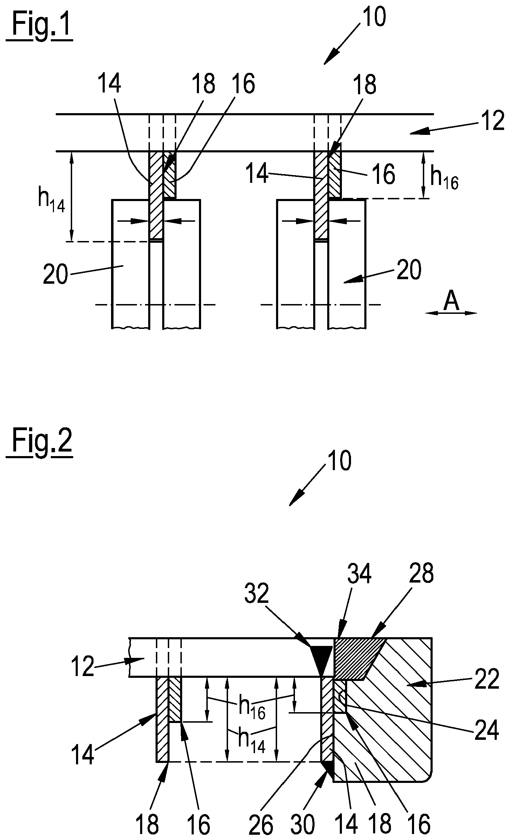

Fig. 1 zeigt in schematischer Teildarstellung eine nach einem erfindungsgemäßen Verfahren hergestellte beispielhafte Ausführungsform einer erfindungsgemäßen Siebvorrichtung 10, insbesondere Siebkorb, für einen in der Papier erzeugenden Industrie einsetzbaren Drucksortierer.

Die Siebvorrichtung 10 umfasst eine Vielzahl von Profilstäben 12, von denen im vorliegenden Fall nur einer zu erkennen ist. Diese Profilstäbe 12 sind parallel zueinander klemmend in randoffene Aussparungen von zu Ringen gebogenen ersten leistenartigen Stabhaltern 14 eingesetzt, deren beide Stoßenden fest miteinander verbunden, insbesondere verschweißt sind.

Zusätzlich zu den ersten Stabhaltern 14 ist jeweils zumindest ein weiterer zu einem Ring gebogener leistenartiger Stabhalter 16 mit randoffenen Aussparungen vorgesehen, dessen radiale Höhe h₁₆ geringer ist als die radiale Höhe h₁₄ des jeweiligen ersten Stabhalters 14.

Dabei bilden die ersten Stabhalter 14 und die diesen zugeordneten weiteren Stabhalter 16 Stabhalterpakete 18 aus jeweils einem ersten Stabhalter 14 und wenigstens einem in Axialrichtung A der Siebvorrichtung 10 unmittelbar angrenzenden weiteren Stabhalter 16.

Die Profilstäbe 12 sind parallel zueinander klemmend in die randoffenen Aussparungen der Stabhalterpakete 18 eingesetzt, wobei die Profilstäbe 12 auch in den Aussparungen der weiteren Stabhalter 16 eingeklemmt sind. An ihren beiden Stoßenden sind die umgebogenen Stabhalterpakete 18 fest miteinander verbunden, insbesondere verschweißt.

Zur Herstellung einer solchen rotationssymmetrischen, insbesondere zylindrischen Siebvorrichtung 10 werden erste leistenartige Stabhalter 14 erzeugt, deren Form von der späteren Ringform in der fertigen Siebvorrichtung 10 abweicht und die mit randoffenen Aussparungen versehen sind, in die die Profilstäbe 12 einsetzbar sind.

Die Profilstäbe 12 werden parallel zueinander in die randoffenen Aussparungen der ersten Stabhalter 14 eingesetzt. Aus den mit den Profilstäben 12 versehenen ersten Stabhaltern 14 werden durch Umbiegen Ringe erzeugt. Die Profilstäbe 12 werden mit diesem Umbiegen durch die sich verengenden Aussparungen in diesen Aussparungen eingeklemmt. Nach dem Umbiegen werden die ersten Stabhalter 14 an ihren beiden Stoßenden fest miteinander verbunden, insbesondere verschweißt.

Erfindungsgemäß wird nun zusätzlich zu den ersten leistenartigen Stabhaltern 14 jeweils zumindest ein weiterer leistenartiger Stabhalter 16 mit randoffenen Aussparungen erzeugt, dessen Form von der späteren Ringform in der fertigen Siebvorrichtung 10 abweicht und dessen in Radialrichtung der späteren Ringform gemessene Höhe h₁₆ geringer ist als die Höhe h₁₄ des jeweiligen ersten Stabhalters 14. Dabei werden aus den ersten leistenartigen Stabhaltern 14 und den diesen zugeordneten weiteren leistenartigen Stabhaltern 16 Stabhalterpakete 18 aus jeweils einem ersten leistenartigen Stabhalter 14 und wenigstes einem in Axialrichtung A der fertigen Siebvorrichtung 10 unmittelbar angrenzenden weiteren leistenartigen Stabhalter 16 gebildet.

Die Profilstäbe 12 werden parallel zueinander in die randoffenen Aussparungen der Stabhalterpakete 18 eingesetzt. Mit dem Umbiegen der ersten Stabhalter 14 werden die weiteren Stabhalter 16 mit umgebogen. Dadurch werden die Profilstäbe 12 durch die sich verengenden Aussparungen der weiteren Stabhalter 16 auch in den Aussparungen dieser weiteren Stabhalter 16 eingeklemmt. Nach dem Umbiegen werden die Stabhalterpakete 18 an ihren beiden Stoßenden fest miteinander verbunden, insbesondere verschweißt.

Dabei werden die ersten leistenartigen Stabhalter 14 insbesondere mittels Biegevorrichtungen 20 zu Ringen umgebogen und die den ersten leistenartigen Stabhaltern 14 zugeordneten weiteren leistenartigen Stabhalter 16 über die in die randoffenen Aussparungen der Stabhalterpakete 18 eingesetzten Profilstäbe 12 mitgeschleppt und damit ebenfalls zu Ringen umgebogen. Hierbei werden nur die ersten leistenartigen Stabhalter 14 beim Umbiegen zu Ringen in die Biegevorrichtungen 20 eingeklemmt.

Durch die geringere Höhe des Schleppring-Stabhalters 16 kann die so entstandene Siebmatte beispielsweise auf einem 3-Walzen-Walzwerk mit für Stabhalter oder Unterzüge eingestochenen Nuten ganz normal vorgerundet werden. Gegebenenfalls passt die Siebmatte auch in Hydraulikzylinder-Pakete einer Biegeschweißmaschine, mittels derer die Siebenden der höheren ersten Stabhalter 14 z.B. hydraulisch gehalten, unter Spannung zusammengezogen und geschweißt werden.

Wie bereits erwähnt, werden dabei die weiteren Stabhalter 16 geringerer Höhe "mitgeschleppt".

Durch die dabei entstehende Längendifferenz durch die unterschiedlichen neutralen Fasern treten unterschiedliche Klemmungen und ein "Verspannungseffekt" am Leistenpaket auf. Zwischen den beispielsweise lasergeschnittenen Profilstabnuten und den Profilstäben entstehen unterschiedlich große Längenveränderungen, was zu einem gegenseitigen Verspannen führt. Durch diesen Effekt und die zusätzliche größere Unterzugdicke entsteht ein extrem stabiler Siebkorb mit hoher Klemmkraft.

Die Biegevorrichtungen 20 können insbesondere auch Walzen mit Nuten oder dergleichen umfassen.

Fig. 2 zeigt in schematischer Teildarstellung eine nach einem erfindungsgemäßen Verfahren hergestellte beispielhafte Ausführungsform einer erfindungsgemäßen Siebvorrichtung 10 mit im Bereich von Endringen 22 vorgesehenen Stabhalterpaketen 18, wobei im vorliegenden Fall lediglich ein Endbereich der Siebvorrichtung 10 dargestellt ist.

Die Siebvorrichtung 10, insbesondere Siebkorb, für einen in der Papier erzeugenden

Industrie einsetzbaren Drucksortierer umfasst wieder eine Vielzahl von Profilstäben 12, die parallel zueinander klemmend in randoffene Aussparungen von zu Ringen gebogenen ersten leistenartigen Stabhaltern 14 eingesetzt sind, deren beide Stoßenden fest miteinander verbunden, insbesondere verschweißt sind.

Erfindungsgemäß ist zusätzlich zu zwei im Bereich eines jeweiligen stirnseitigen Endringes 22 der Siebvorrichtung 10 vorgesehenen ersten Stabhaltern 14 jeweils ein weiterer zu einem Ring gebogener Stabhalter 16 mit randoffenen Aussparungen vorgesehen, dessen radiale Höhe h₁₆ geringer ist als die radiale Höhe h₁₄ des jeweiligen ersten Stabhalters 14.

Dabei bilden die betreffenden ersten Stabhalter 14 und die diesen zugeordneten weiteren Stabhalter 16 Stabhalterpakete 18 aus jeweils einem ersten Stabhalter 14 und einem in Axialrichtung A unmittelbar angrenzenden oder in einem gewissen Abstand vorgesehenen, zwischen dem ersten Stabhalter 14 und dem betreffenden Endring 22 angeordneten weiteren Stabhalter 16.

Die Profilstäbe 12 sind parallel zueinander klemmend in die randoffenen Aussparungen der Stabhalterpakete 18 eingesetzt, wobei die Profilstäbe 12 auch in die verengten Aussparungen der zu Ringen gebogenen weiteren Stabhalter 16 eingeklemmt sind. Die umgebogenen Stabhalterpakete 18 sind an ihren beiden Stoßenden fest miteinander verbunden, insbesondere verschweißt.

Der weitere Stabhalter 16 eines jeweiligen Stabhalterpakets 18 im Bereich eines jeweiligen Endringes 22 ist spielfrei in eine Vertiefung des betreffenden Endringes 22 gefügt und mit dem Endring 22 verschweißt. Der erste Stabhalter 14 eines jeweiligen Stabhalterpakets im Bereich eines jeweiligen Endringes 22 liegt an der inneren Stirnfläche 26 des betreffenden Endringes an und ist im Bereich seines von den Profilstäben 12 abgewandten Randes mit dem Endring 22 verschweißt.

Beim vorliegenden Ausführungsbeispiel sind die Profilstäbe 12 beispielsweise am Innenrand der Stabhalter 14, 16 eingesetzt. Es handelt sich hier also um eine Siebvorrichtung 10 für eine zentrifugale Fahrweise mit von innen nach außen gerichteter Suspensionsströmung. Dabei ist der weitere Stabhalter 16 eines jeweiligen im Bereich eines Endringes 22 vorgesehenen Stabhalterpakets 18 über eine Schweißnaht 28 im Bereich des Innendurchmessers des betreffenden Endringes 22 und der erste Stabhalter 14 eines solchen Stabhalterpakets 18 über eine Dichtnaht 30 im Bereich seines Außendurchmessers mit dem betreffenden Endring 22 verschweißt.

Im vorliegenden Fall ist auch zwischen den im Bereich der Endringe 22 vorgesehenen Stabhalterpakete 18 noch zumindest ein weiteres Stabhalterpaket 18 vorgesehen, das insbesondere wieder in der zuvor beschriebenen Weise ausgeführt und/oder hergestellt sei kann. Es sind jedoch insbesondere auch solche Ausführungen der Siebvorrichtung 10 denkbar, bei denen lediglich im Bereich der Endringe solche Stabhalterpakete 18 mit den ersten Stabhaltern zugeordneten weiteren Stabhaltern vorgesehen sind.

Mit der zuletzt beschriebenen Ausführung der Siebvorrichtung 10 bzw. Endringanbindung gelangt die Wärmeeinflusszone 34 der Hauptschweißnaht tiefer in den Endring 22, und die Verformungskraft der Profilstäbe 12 wirkt beim Betrieb im Sortierer stärker auf die ungeschweißte Klemmstelle 32 im Leistenpaket bzw. am ersten Unterzug oder Stabhalter 14 größerer bzw. normaler Höhe. Die Schweißnaht wird dadurch deutlich entlastet, und die Kerbwirkung kommt infolge der deutlich geringeren Belastung auch weniger zum Tragen.

Zur Herstellung einer solchen rotationssymmetrischen, insbesondere zylindrischen Siebvorrichtung 10 der in der Fig. 2 dargestellten Art werden erste Stabhalter 14 erzeugt, deren Form von der späteren Ringform in der fertigen Siebvorrichtung 10 abweicht und die mit randoffenen Aussparungen versehen sind, in die die Profilstäbe 12 einsetzbar sind. Die Profilstäbe 12 werden parallel zueinander in die randoffenen Aussparungen der ersten Stabhalter 14 eingesetzt. Aus den mit den Profilstäben 12 versehenen ersten Stabhaltern 14 werden durch Umbiegen Ringe erzeugt. Die Profilstäbe 12 werden mit diesem Umbiegen durch die sich verengenden Aussparungen in diesen Aussparungen eingeklemmt. Nach dem Umbiegen werden die ersten Stabhalter 14 an ihren beiden Stoßenden fest miteinander verbunden.

Erfindungsgemäß wird nun zusätzlich zu zwei in der fertigen Siebvorrichtung 10 im Bereich eines jeweiligen stirnseitigen Endringes 22 der Siebvorrichtung 10 zu positionierenden ersten leistenartigen Stabhaltern 14 jeweils ein weiterer leistenartiger Stabhalter 16 mit randoffenen Aussparungen erzeugt, dessen Form von der späteren Ringform in der fertigen Siebvorrichtung 10 abweicht und dessen in Radialrichtung der späteren Ringform gemessene Höhe h₁₆ geringer ist als die Höhe h₁₄ des jeweiligen ersten Stabhalters 14.

Aus den betreffenden ersten leistenartigen Stabhaltern 14 und den diesen zugeordneten weiteren leistenartigen Stabhaltern 16 werden Stabhalterpakete 18 aus jeweils einem ersten leistenartigen Stabhalter 14 und einem in Axialrichtung A der fertigen Siebvorrichtung 10 unmittelbar angrenzenden, zwischen dem ersten leistenartigen Stabhalter 14 und dem betreffenden Endring 22 angeordneten weiteren leistenartigen Stabhalter 16 gebildet.

Die Profilstäbe 12 werden parallel zueinander in die randoffenen Aussparungen der Stabhalterpakete 18 eingesetzt. Mit dem Umbiegen der ersten Stabhalter 14 werden die weiteren Stabhalter 16 mit umgebogen und dadurch die Profilstäbe 12 durch die sich verengenden Aussparungen der weiteren Stabhalter 16 auch in den Aussparungen dieser weiteren Stabhalter 16 eingeklemmt.

Die Stabhalterpakete 18 werden nach dem Umbiegen an ihren beiden Stoßenden fest miteinander verbunden, insbesondere verschweißt. Der weitere Stabhalter 16 eines jeweiligen Stabhalterpakets 18 wird anschließend spielfrei in eine Vertiefung des betreffenden Endringes 22 gefügt und mit dem Endring 22 verschweißt. Der erste Stabhalter 14 eines jeweiligen Stabhalterpakets 18 wird in Anlage an der inneren Stirnfläche 26 des betreffenden Endringes im Bereich seines von den Profilstäben 12 abgewandten Randes mit dem Endring 22 verschweißt.

Insbesondere zur Herstellung einer zentrifugal betreibbaren Siebvorrichtung 10 mit am Innenrand der Stabhalter 14, 16 eingesetzten Profilstäben 12 wird der weitere Stabhalter 16 eines jeweiligen Stabhalterpakets 18 über eine Schweißnaht 28 im Bereich des Innendurchmessers des betreffenden Endringes 22 und der erste Stabhalter 14 eines jeweiligen Stabhalterpakets über eine Dichtnaht 30 im Bereich seines Außendurchmessers mit dem betreffenden Endring 22 verschweißt.

### Bezugszeichenliste

- 10: Siebvorrichtung
- 12: Profilstab
- 14: erster Stabhalter
- 16: weiterer Stabhalter
- 18: Stabhalterpaket
- 20: Biegevorrichtung
- 22: Endring
- 24: Vertiefung
- 26: Stirnfläche
- 28: Schweißnaht
- 30: Dichtnaht
- 32: Klemmstelle
- 34: Wärmeeinflusszone

- A: Axialrichtung
- h₁₄: radiale Höhe
- h₁₆: radiale Höhe

## Patentansprüche

1. Verfahren zur Herstellung einer rotationssymmetrischen, insbesondere zylindrischen Siebvorrichtung (10), mit einer Vielzahl von Profilstäben 12), bei dem erste leistenartige Stabhalter (14) erzeugt werden, deren Form von der späteren Ringform in der fertigen Siebvorrichtung (10) abweicht und die mit randoffenen Aussparungen versehen sind, in die die Profilstäbe (12) einsetzbar sind, die Profilstäbe (12) parallel zueinander in die randoffenen Aussparungen der ersten Stabhalter (14) eingesetzt werden, aus den mit den Profilstäben (12) versehenen ersten Stabhaltern (14) durch Umbiegen Ringe erzeugt werden, die Profilstäbe (12) mit diesem Umbiegen durch die sich verengenden Aussparungen in diesen Aussparungen eingeklemmt werden, und die ersten Stabhalter nach dem Umbiegen an ihren beiden Stoßenden fest miteinander verbunden werden,
**dadurch gekennzeichnet, dass** zusätzlich zu den ersten leistenartigen Stabhaltern (14) jeweils zumindest ein weiterer leistenartiger Stabhalter (16) mit randoffenen Aussparungen erzeugt wird, dessen Form von der späteren Ringform in der fertigen Siebvorrichtung (10) abweicht und dessen in Radialrichtung der späteren Ringform gemessene Höhe (h₁₆) geringer ist als die Höhe (h₁₄) des jeweiligen ersten Stabhalters (14), aus den ersten leistenartigen Stabhaltern (14) und den diesen zugeordneten weiteren leistenartigen Stabhaltern (16) Stabhalterpakete (18) aus jeweils einem ersten leistenartigen Stabhalter (14) und wenigstens einem in Axialrichtung (A) der fertigen Siebvorrichtung (10) unmittelbar angrenzenden oder in einem gewissen Abstand vorgesehenen weiteren leistenartigen Stabhalter (16) gebildet werden, die Profilstäbe (12) parallel zueinander in die randoffenen Aussparungen der Stabhalterpakete (18) eingesetzt werden, mit dem Umbiegen der ersten Stabhalter (14) die weiteren Stabhalter (16) mit umgebogen und dadurch die Profilstäbe (12) durch die sich verengenden Aussparungen der weiteren Stabhalter (16) auch in den Aussparungen dieser weiteren Stabhalter (16) eingeklemmt werden und die Stabhalterpakete nach dem Umbiegen an ihren beiden Stoßenden fest miteinander verbunden werden.

2. Verfahren nach Anspruch 1,
**dadurch gekennzeichnet, dass** zumindest ein Stabhalterpaket (18) aus einem ersten Stabhalter (14) und einem weiteren Stabhalter (16) gebildet wird.

3. Verfahren nach Anspruch 1 oder 2,
**dadurch gekennzeichnet, dass** zumindest ein Stabhalterpaket (18) aus einem ersten Stabhalter (14) und zwei weiteren Stabhaltern (16) gebildet wird.

4. Verfahren nach zumindest einem der vorstehenden Ansprüche,
**dadurch gekennzeichnet, dass** die leistenartigen Stabhalter (14, 16) durch Laserschneiden erzeugt werden.

5. Verfahren nach zumindest einem der vorstehenden Ansprüche,
**dadurch gekennzeichnet, dass** die Stabhalter (14, 16) wenigstens eines Stabhalterpakets (18) aus demselben Material erzeugt werden.

6. Verfahren nach zumindest einem der vorstehenden Ansprüche,
**dadurch gekennzeichnet, dass** die Stabhalter (14, 16) wenigstens eines Stabhalterpakets (18) zumindest teilweise aus unterschiedlichem Material erzeugt werden.

7. Verfahren nach zumindest einem der vorstehenden Ansprüche,
**dadurch gekennzeichnet, dass** die Stabhalter (14, 16) wenigstens eines Stabhalterpakets (18) dieselbe in Axialrichtung (A) der fertigen Siebvorrichtung (10) gemessene Dicke besitzen.

8. Verfahren nach einem der Ansprüche 1 bis 6,
**dadurch gekennzeichnet, dass** die Stabhalter (14, 16) wenigstens eines Stabhalterpakets (18) zumindest teilweise eine unterschiedliche in Axialrichtung (A) der fertigen Siebvorrichtung (10) gemessene Dicke besitzen.

9. Verfahren nach zumindest einem der vorstehenden Ansprüche,
**dadurch gekennzeichnet, dass** die ersten leistenartigen Stabhalter (14) mittels Biegevorrichtungen (20) zu Ringen umgebogen werden und die den ersten leistenartigen Stabhaltern (14) zugeordneten weiteren leistenartigen Stabhalter (16) über die in die randoffenen Aussparungen der Stabhalterpakete (18) eingesetzten Profilstäbe (12) mitgeschleppt und damit ebenfalls zu Ringen umgebogen werden.

10. Verfahren nach Anspruch 9,
**dadurch gekennzeichnet, dass** die ersten leistenartigen Stabhalter (14) beim Umbiegen zu Ringen in die Biegevorrichtungen (20) eingeklemmt werden.

11. Verfahren nach zumindest einem der vorstehenden Ansprüche,
**dadurch gekennzeichnet, dass** die Stabhalterpakete (18) an ihren beiden Stoßenden durch Schweißen miteinander verbunden werden.

12. Verfahren nach zumindest einem der vorstehenden Ansprüche,
**dadurch gekennzeichnet, dass** das Umbiegen der Stabhalterpakete (18) und das Verbinden der beiden Stoßenden der Stabhalterpakete (18) in derselben Maschine, insbesondere einer Biege- und Schweißmaschine, durchgeführt werden.

13. Verfahren zur Herstellung einer rotationssymmetrischen, insbesondere zylindrischen Siebvorrichtung (10) mit einer Vielzahl von Profilstäben, nach zumindest einem der vorstehenden Ansprüche, bei dem erste leistenartige Stabhalter (14) erzeugt werden, deren Form von der späteren Ringform in der fertigen Siebvorrichtung (10) abweicht und die mit randoffenen Aussparungen versehen sind, in die die Profilstäbe (12) einsetzbar sind, die Profilstäbe (12) parallel zueinander in die randoffenen Aussparungen der ersten Stabhalter (14) eingesetzt werden, aus den mit den Profilstäben (12) versehenen ersten Stabhaltern (14) durch Umbiegen Ringe erzeugt werden, die Profilstäbe (12) mit diesem Umbiegen durch die sich verengenden Aussparungen in diesen Aussparungen eingeklemmt werden, und die ersten Stabhalter nach dem Umbiegen an ihren beiden Stoßenden fest miteinander verbunden werden, **dadurch gekennzeichnet, dass** zusätzlich zu zwei in der fertigen Siebvorrichtung (10) im Bereich eines jeweiligen stirnseitigen Endringes (22) der Siebvorrichtung (10) zu positionierenden ersten leistenartigen Stabhaltern (14) jeweils ein weiterer leistenartiger Stabhalter (16) mit randoffenen Aussparungen erzeugt wird, dessen Form von der späteren Ringform in der fertigen Siebvorrichtung (10) abweicht und dessen in Radialrichtung der späteren Ringform gemessene Höhe (h₁₆) geringer ist als die Höhe (h₁₄) des jeweiligen ersten Stabhalters (14), aus den betreffenden ersten leistenartigen Stabhaltern (14) und den diesen zugeordneten weiteren leistenartigen Stabhaltern (16) Stabhalterpakete (18) aus jeweils einem ersten leistenartigen Stabhalter (14) und einem in Axialrichtung (A) der fertigen Siebvorrichtung (10) unmittelbar angrenzenden, zwischen dem ersten leistenartigen Stabhalter (14) und dem betreffenden Endring (22) angeordneten weiteren leistenartigen Stabhalter (16) gebildet werden, die Profilstäbe (12) parallel zueinander in die randoffenen Aussparungen der Stabhalterpakete (18) eingesetzt werden, mit dem Umbiegen der ersten Stabhalter (14) die weiteren Stabhalter (16) mit umgebogen und dadurch die Profilstäbe (12) durch die sich verengenden Aussparungen der weiteren Stabhalter (16) auch in den Aussparungen dieser weiteren Stabhalter (16) eingeklemmt werden, die Stabhalterpakete (18) nach dem Umbiegen an ihren beiden Stoßenden fest miteinander verbunden werden, der weitere Stabhalter (16) eines jeweiligen Stabhalterpakets (18) anschließend spielfrei in eine Vertiefung des betreffenden Endringes (22) gefügt und mit dem Endring (22) verschweißt wird, und der erste Stabhalter (14) eines jeweiligen Stabhalterpakets (18) in Anlage an der inneren Stirnfläche (26) des betreffenden Endringes (22) im Bereich seines von den Profilstäben (12) abgewandten Randes mit dem Endring (22) verschweißt wird.

14. Verfahren nach Anspruch 13,
**dadurch gekennzeichnet, dass** zur Herstellung einer zentrifugal betreibbaren Siebvorrichtung (10) mit am Innenrand der Stabhalter (14, 16) eingesetzten Profilstäben (12) der weitere Stabhalter (16) eines jeweiligen Stabhalterpakets (18) über eine Schweißnaht (28) im Bereich des Innendurchmessers des betreffenden Endringes (22) und der erste Stabhalter (14) eines jeweiligen Stabhalterpakets (18) über eine Dichtnaht (30) im Bereich seines Außendurchmessers mit dem betreffenden Endring (22) verschweißt wird.

15. Siebvorrichtung (10), insbesondere Siebkorb, für einen Drucksortierer, hergestellt durch ein Verfahren nach zumindest einem der vorstehenden Ansprüche.

16. Siebvorrichtung (10), insbesondere Siebkorb, für einen Drucksortierer nach Anspruch 15, mit einer Vielzahl von Profilstäben (12), die parallel zueinander klemmend in randoffene
Aussparungen von zu Ringen gebogenen ersten leistenartigen Stabhaltern (14) eingesetzt sind, deren beide Stoßenden fest miteinander verbunden sind,
**dadurch gekennzeichnet, dass** zusätzlich zu den ersten Stabhaltern (14) jeweils zumindest ein weiterer zu einem Ring gebogener leistenartiger Stabhalter (16) mit randoffenen Aussparungen vorgesehen ist, dessen radiale Höhe (h₁₆) geringer ist als die radiale Höhe (h₁₄) des jeweiligen ersten Stabhalters, die ersten Stabhalter (14) und die diesen zugeordneten weiteren Stabhalter (16) Stabhalterpakete (18) aus jeweils einem ersten Stabhalter (14) und wenigstens einem in Axialrichtung (A) der Siebvorrichtung (10) unmittelbar angrenzenden oder in einem Abstand vorgesehenen weiteren Stabhalter (16) bilden, die Profilstäbe (12) parallel zueinander klemmend in die randoffenen Aussparungen der Stabhalterpakete eingesetzt sind, wobei die Profilstäbe (12) auch in den Aussparungen der weiteren Stabhalter eingeklemmt sind, und die umgebogenen Stabhalterpakete (18) an ihren beiden Stoßenden fest miteinander verbunden sind.

17. Siebvorrichtung (10), insbesondere Siebkorb, für einen in der Papier erzeugenden Industrie einsetzbaren Drucksortierer, nach Anspruch 16, mit einer Vielzahl von Profilstäben (12), die parallel zueinander klemmend in randoffene Aussparungen von zu Ringen gebogenen ersten leistenartigen Stabhaltern (14) eingesetzt sind, deren beide Stoßenden fest miteinander verbunden sind,
**dadurch gekennzeichnet, dass** zusätzlich zu zwei im Bereich eines jeweiligen stirnseitigen Endringes (22) der Siebvorrichtung (10) vorgesehenen ersten Stabhaltern (14) jeweils ein weiterer zu einem Ring gebogener Stabhalter (16) mit randoffenen Aussparungen vorgesehen ist, dessen radiale Höhe (h₁₆) geringer ist als die Höhe (h₁₄) des jeweiligen ersten Stabhalters (14), die betreffenden ersten Stabhalter (14) und die diesen zugeordneten weiteren Stabhalter (16) Stabhalterpakete (18) aus jeweils einem ersten Stabhalter (14) und einem in Axialrichtung (A) unmittelbar
angrenzenden oder in einem gewissen Abstand vorgesehenen, zwischen dem ersten Stabhalter (14) und dem betreffenden Endring (22) angeordneten weiteren Stabhalter (16) bilden, die Profilstäbe (12) parallel zueinander klemmend in die randoffenen Aussparungen der Stabhalterpakete (18) eingesetzt sind, wobei die Profilstäbe (12) auch in die verengten Aussparungen der zu Ringen gebogenen weiteren Stabhalter (16) eingeklemmt sind, die umgebogenen Stabhalterpakete (18) an ihren beiden Stoßenden fest miteinander verbunden sind, der weitere Stabhalter (16) eines jeweiligen Stabhalterpakets (18) spielfrei in eine Vertiefung (24) des betreffenden Endringes (22) gefügt und mit dem Endring (22) verschweißt ist, und der erste Stabhalter (14) eines jeweiligen Stabhalterpakets (18) an der inneren Stirnfläche des betreffenden Endringes (22) anliegt und im Bereich seines von den Profilstäben (12) abgewandten Randes mit dem Endring (22) verschweißt ist.

18. Siebvorrichtung nach Anspruch 17,
**dadurch gekennzeichnet, dass** die Profilstäbe (12) am Innenrand der Stabhalter (14, 16) eingesetzt sind und der weitere Stabhalter (16) eines jeweiligen Stabhalterpakets (18) über eine Schweißnaht (28) im Bereich des Innendurchmessers des betreffenden Endringes (22) und der erste Stabhalter (14) eines jeweiligen Stabhalterpakets über eine Dichtnaht (30) im Bereich seines Außendurchmessers mit dem betreffenden Endring (22) verschweißt ist.

## Claims

1. Method for producing a rotationally symmetrical, in particular a cylindrical, screen device (10), having a multiplicity of profiled rods (12), in which method first strip-type rod holders (14) are generated, the shape of the latter deviating from the later annular shape in the finished screen device (10), and said first rod holders (14) being provided with peripherally open clearances into which the profiled rods (12) are insertable; the profiled rods (12) are inserted in a mutually parallel manner into the peripherally open clearances of the first rod holders (14); rings are generated from the first rod holders (14) that are provided with the profiled rods (12) by bending; the profiled rods (12) by way of this bending, on account of the constricting clearances, are jammed in these clearances; and the first rod holders after bending are fixedly interconnected at the two abutting ends thereof,
**characterized in that**
additionally to the first strip-type rod holders (14), in each case at least one further strip-type rod holder (16) having peripherally open clearances is generated, the shape of said rod holder (16) deviating from the later annular shape in the finished screen device (10), and the height (h₁₆) thereof, measured in the radial direction of the later annular shape, being less than the height (h₁₄) of the respective first rod holder (14); rod holder packs (18) from in each case one first strip-type rod holder (14) and at least one further strip-type rod holder (16) that in the axial direction (A) of the finished screen device (10) is provided so as to be directly adjacent to or at a certain spacing from said first rod holder (14) are formed from the first strip-type rod holders (14) and the further strip-type rod holders (16) that are assigned to said first rod holders (14); the profiled rods (12) are inserted in a mutually parallel manner into the peripherally open clearances of the rod holder packs (18); the further rod holders (16) are conjointly bent by way of bending the first rod holders (14) and, on account thereof, the profiled rods (12) on account of the constricting clearances of the further rod holders (16) are also jammed in the clearances of these further rod holders (16); and the rod holder packs after bending are fixedly interconnected at the two abutting ends thereof.

2. Method according to Claim 1, **characterized in that** at least one rod holder pack (18) is formed from a first rod holder (14) and a further rod holder (16) .

3. Method according to Claim 1 or 2, **characterized in that** at least one rod holder pack (18) is formed from a first rod holder (14) and two further rod holders (16).

4. Method according to at least one of the preceding claims, **characterized in that** the strip-type rod holders (14, 16) are generated by laser cutting.

5. Method according to at least one of the preceding claims, **characterized in that** the rod holders (14, 16) of at least one rod holder pack (18) are generated from the same material.

6. Method according to at least one of the preceding claims, **characterized in that** the rod holders (14, 16) of at least one rod holder pack (18) are at least in part generated from dissimilar materials.

7. Method according to at least one of the preceding claims, **characterized in that** the rod holders (14, 16) of at least one rod holder pack (18) have the same thickness measured in the axial direction (A) of the finished screen device (10).

8. Method according to one of Claims 1 to 6, **characterized in that** the rod holders (14, 16) of at least one rod holder pack (18) at least in part have dissimilar thicknesses measured in the axial direction (A) of the finished screen device (10).

9. Method according to at least one of the preceding claims, **characterized in that** the first strip-type rod holders (14) are bent to form rings by means of bending devices (20), and the further strip-type rod holders (16) that are assigned to the first strip-type rod holders (14) by way of the profiled rods (12) that are inserted into the peripherally open clearances of the rod holder packs (18) are entrained and are thus likewise bent to form rings.

10. Method according to Claim 9, **characterized in that** the first strip-type rod holders (14) when bending to form rings are jammed into the bending devices (20) .

11. Method according to at least one of the preceding claims, **characterized in that** the rod holder packs (18) are interconnected by welding at the two abutting ends thereof.

12. Method according to at least one of the preceding claims, **characterized in that** the bending of the rod holder packs (18) and the connecting of the two abutting ends of the rod holder packs (18) are carried out in the same machine, in particular in a bending and welding machine.

13. Method for producing a rotationally symmetrical, in particular cylindrical, screen device (10) having a multiplicity of profiled rods, according to at least one of the preceding claims, in which method first strip-type rod holders (14) are generated, the shape of the latter deviating from the later annular shape in the finished screen device (10), and said first rod holders (14) being provided with peripherally open clearances into which the profiled rods (12) are insertable; the profiled rods (12) are inserted in a mutually parallel manner into the peripherally open clearances of the first rod holders (14); rings are generated from the first rod holders (14) that are provided with the profiled rods (12) by bending; the profiled rods (12) by way of this bending, on account of the constricting clearances, are jammed in these clearances; and the first rod holders after bending are fixedly interconnected at the two abutting ends thereof,
**characterized in that**
additionally to two first strip-type rod holders (14) that are to be positioned in the finished screen device (10) in the region of a respective end-side end ring (22) of the screen device (10), in each case one further strip-type rod holder (16) having peripherally open clearances is generated, the shape of said rod holder (16) deviating from the later annular shape in the finished screen device (10), and the height (h₁₆) thereof, measured in the radial direction of the later annular shape, being less than the height (h₁₄) of the respective first rod holder (14); rod holder packs (18) from in each case one first strip-type rod holder (14) and a further strip-type rod holder (16) that in the axial direction (A) of the finished screen device (10) is disposed between the first strip-type rod holder (14) and the respective end ring (22) so as to be directly adjacent to said first rod holder (14) are formed from the respective first strip-type rod holders (14) and the further strip-type rod holders (16) that are assigned to said first rod holders (14); the profiled rods (12) are inserted in a mutually parallel manner into the peripherally open clearances of the rod holder packs (18); the further rod holders (16) are conjointly bent by way of bending the first rod holders (14) and, on account thereof, the profiled rods (12) on account of the constricting clearances of the further rod holders (16) are also jammed in the clearances of these further rod holders (16); the rod holder packs (18) after bending are fixedly interconnected at the two abutting ends thereof; the further rod holder (16) of a respective rod holder pack (18) is subsequently fitted without play into a depression of the respective end ring (22) and is welded to the end ring (22); and the first rod holder (14) of a respective rod holder pack (18), so as to bear on the inner end face (26) of the respective end ring (22), in the region of the periphery of said first rod holder (14) that faces away from the profiled rods (12) is welded to the end ring (22).

14. Method according to Claim 13, **characterized in that** for producing a centrifugally operable screen device (10) having profiled rods (12) that are inserted on the inner periphery of the rod holders (14, 16), the further rod holder (16) of a respective rod holder pack (18) by way of a weld seam (28) in the region of the internal diameter of the respective end ring (22), and the first rod holder (14) of a respective rod holder pack (18) by way of a sealing seam (30) in the region of the external diameter of said first rod holder (14), are welded to the respective end ring (22).

15. Screen device (10), in particular a screen basket, for a pressurized screen, produced by a method according to at least one of the preceding claims.

16. Screen device (10), in particular a screen basket, for a pressurized screen according to Claim 15, having a multiplicity of profiled rods (12) which are inserted in a mutually parallel manner so as to jam into peripherally open clearances of first strip-type rod holders (14) that are bent to form rings, the two abutting ends of said first rod holders (14) being fixedly interconnected, **characterized in that** additionally to the first rod holders (14), in each case at least one further strip-type rod holder (16), having peripherally open clearances, that is bent to form a ring is provided, the radial height (h₁₆) of said further rod holder (16) being less than the radial height (h₁₄) of the respective first rod holder; the first rod holders (14) and the further rod holders (16) that are assigned to said first rod holders (14) form rod holder packs (18) from in each case one first rod holder (14) and at least one further rod holder (16) that in the axial direction (A) of the screen device (10) is provided so as to be directly adjacent to or at a spacing from said first rod holder (14); the profiled rods (12) are inserted in a mutually parallel manner so as to jam into the peripherally open clearances of the rod holder packs, wherein the profiled rods (12) are also jammed in the clearances of the further rod holders, and the bent rod holder packs (18) are fixedly interconnected at the two abutting ends thereof.

17. Screen device (10), in particular a screen basket, for a pressurized screen that is usable in the paper-producing industry, according to Claim 16, having a multiplicity of profiled rods (12) which are inserted in a mutually parallel manner so as to jam into peripherally open clearances of first strip-type rod holders (14) that are bent to form rings, the two abutting ends of said first rod holders (14) being fixedly interconnected, **characterized in that** additionally to two first rod holders (14) that are provided in the region of a respective end-side end ring (22) of the screen device (10), in each case one further rod holder (16), having peripherally open clearances, that is bent to form a ring is provided, the radial height (h₁₆) of said further rod holder (16) being less than the height (h₁₄) of the respective first rod holder (14); the respective first rod holders (14) and the further rod holders (16) that are assigned to said first rod holders (14) form rod holder packs (18) from in each case one first rod holder (14) and a further rod holder (16) that in the axial direction (A) is provided so as to be directly adjacent or at a certain spacing from said first rod holder (14) and is disposed between the first rod holder (14) and the respective end ring (22); the profiled rods (12) are inserted in a mutually parallel manner so as to jam into the peripherally open clearances of the rod holder packs (18), wherein the profiled rods (12) are also jammed into the constricted clearances of the further rod holders (16) that are bent to form rings; the bent rod holder packs (18) are fixedly interconnected at the two abutting ends thereof; the further rod holder (16) of a respective rod holder pack (18) is fitted without play in a depression (24) of the respective end spring (22) and is welded to the end ring (22); and the first rod holder (14) of a respective rod holder pack (18) bears on the inner end face of the respective end ring (22) and in the region of the periphery of said first rod holder (14) that faces away from the profiled rods (12) is welded to the end ring (22) .

18. Screen device according to Claim 17, **characterized in that** the profiled rods (12) are inserted on the inner periphery of the rod holders (14, 16), and a further rod holder (16) of the respective rod holder pack (18) by way of a weld seam (28) in the region of the internal diameter of the respective end ring (22), and the first rod holder (14) of a respective rod holder pack by way of a sealing seam (30) in the region of the external diameter of said first rod holder (14), are welded to the respective end ring (22).

## Revendications

1. Procédé de fabrication d'un appareil de tamisage à symétrie de révolution, en particulier cylindrique, (10), avec une multiplicité de barres profilées (12), dans lequel on produit des premiers supports de barre (14) en forme de lattes, dont la forme s'écarte de la forme annulaire ultérieure dans l'appareil de tamisage terminé (10) et qui sont munies de découpes ouvertes dans le bord, dans lesquelles les barres profilées (12) peuvent être insérées, on insère les barres profilées (12) parallèlement l'une à l'autre dans les découpes ouvertes dans le bord des premiers supports de barre (14), on produit des anneaux par cintrage à partir des premiers supports de barre (14) munis des barres profilées (12), on coince les barres profilées (12) dans ces découpes avec ce cintrage au moyen des découpes qui se rétrécissent, et on assemble solidement l'un à l'autre les premiers supports de barre par leurs deux extrémités bout à bout après le cintrage, **caractérisé en ce que** l'on produit, en plus des premiers supports de barre en forme de lattes (14), respectivement au moins un autre support de barre en forme de latte (16) avec des découpes ouvertes dans le bord, dont la forme s'écarte de la forme annulaire ultérieure dans l'appareil de tamisage terminé (10) et dont la hauteur (h₁₆) mesurée dans la direction radiale de la forme annulaire ultérieure est inférieure à la hauteur (h₁₄) du premier support de barre respectif (14), on produit à partir des premiers supports de barre en forme de lattes (14) et des autres supports de barre en forme de lattes associés (16) des paquets de supports de barre (18) composés chacun d'un premier support de barre en forme de latte (14) et d'au moins un autre support de barre en forme de latte (16) directement adjacent en direction axiale (A) de l'appareil de tamisage terminé (10) ou prévu à une certaine distance, on insère les barres profilées (12) parallèlement l'une à l'autre dans les découpes ouvertes dans le bord des paquets de supports de barre (18), avec le cintrage des premiers supports de barre (14) on cintre les autres supports de barre (16) et on coince de ce fait également les barres profilées (12) au moyen des découpes des autres supports de barre (16) qui se rétrécissent dans les découpes de ces autres supports de barre (16) et on assemble solidement l'un à l'autre les paquets de supports de barre par leurs deux extrémités bout à bout après le cintrage.

2. Procédé selon la revendication 1, **caractérisé en ce que** l'on forme au moins un paquet de supports de barre (18) composé d'un premier support de barre (14) et d'un autre support de barre (16).

3. Procédé selon la revendication 1 ou 2, **caractérisé en ce que** l'on forme au moins un paquet de supports de barre (18) composé d'un premier support de barre (14) et de deux autres supports de barre (16).

4. Procédé selon au moins une des revendications précédentes, **caractérisé en ce que** l'on produit les supports de barre en forme de lattes (14, 16) par découpage au laser.

5. Procédé selon au moins une des revendications précédentes, **caractérisé en ce que** l'on produit les supports de barre (14, 16) d'au moins un paquet de supports de barre (18) avec le même matériau.

6. Procédé selon au moins une des revendications précédentes, **caractérisé en ce que** l'on produit les supports de barre (14, 16) d'au moins un paquet de supports de barre (18) au moins en partie avec des matériaux différents.

7. Procédé selon au moins une des revendications précédentes, **caractérisé en ce que** les supports de barre (14, 16) d'au moins un paquet de supports de barre (18) présentent la même épaisseur mesurée dans la direction axiale (A) de l'appareil de tamisage terminé (10) .

8. Procédé selon l'une quelconque des revendications 1 à 6, **caractérisé en ce que** les supports de barre (14, 16) d'au moins un paquet de supports de barre (18) présentent au moins en partie une épaisseur différente mesurée dans la direction axiale (A) de l'appareil de tamisage terminé (10).

9. Procédé selon au moins une des revendications précédentes, **caractérisé en ce que** l'on cintre les premiers supports de barre en forme de lattes (14) en anneaux au moyen de dispositifs de cintrage (20) et on entraîne et dès lors on cintre également en anneaux les autres supports de barre en forme de lattes (16) associés aux premiers supports de barre en forme de lattes (14) au moyen des barres profilées (12) insérées dans les découpes ouvertes dans le bord des paquets de supports de barre (18).

10. Procédé selon la revendication 9, **caractérisé en ce que** l'on coince les premiers supports de barre en forme de lattes (14) dans les dispositifs de cintrage (20) lors du cintrage en anneaux.

11. Procédé selon au moins une des revendications précédentes, **caractérisé en ce que** l'on assemble l'un à l'autre les paquets de supports de barre (18) par leurs deux extrémités bout à bout par soudage.

12. Procédé selon au moins une des revendications précédentes, **caractérisé en ce que** l'on exécute le cintrage des paquets de supports de barre (18) et l'assemblage des deux extrémités bout à bout des paquets de supports de barre (18) dans la même machine, en particulier une machine de cintrage et de soudage.

13. Procédé de fabrication d'un appareil de tamisage à symétrie de révolution, en particulier cylindrique, (10), avec une multiplicité de barres profilées, selon au moins une des revendications précédentes, dans lequel on produit des premiers supports de barre en forme de lattes (14), dont la forme s'écarte de la forme annulaire ultérieure dans l'appareil de tamisage terminé (10) et qui sont munies de découpes ouvertes dans le bord, dans lesquelles les barres profilées (12) peuvent être insérées, on insère les barres profilées (12) parallèlement l'une à l'autre dans les découpes ouvertes dans le bord des premiers supports de barre (14), on produit des anneaux par cintrage à partir des premiers supports de barre (14) munis des barres profilées (12), on coince les barres profilées (12) dans ces découpes avec ce cintrage au moyen des découpes qui se rétrécissent, et on assemble solidement l'un à l'autre les premiers supports de barre par leurs deux extrémités bout à bout après le cintrage, **caractérisé en ce qu'**en plus de deux premiers supports de barre en forme de lattes (14) à positionner dans l'appareil de tamisage terminé (10) dans la région d'un anneau d'extrémité frontal respectif (22) de l'appareil de tamisage (10), on produit respectivement au moins un autre support de barre en forme de latte (16) avec des découpes ouvertes dans le bord, dont la forme s'écarte de la forme annulaire ultérieure dans l'appareil de tamisage terminé (10) et dont la hauteur (h₁₆) mesurée dans la direction radiale de la forme annulaire ultérieure est inférieure à la hauteur (h₁₄) du premier support de barre respectif (14), on produit à partir des premiers supports de barre en forme de lattes concernés (14) et des autres supports de barre en forme de lattes associés (16) des paquets de supports de barre (18) composés chacun d'un premier support de barre en forme de latte (14) et d'un autre support de barre en forme de latte (16) directement adjacent en direction axiale (A) de l'appareil de tamisage terminé (10), on forme d'autres supports de barre en forme de lattes (16) disposés entre le premier support de barre en forme de latte (14) et l'anneau d'extrémité concerné (22), on insère les barres profilées (12) parallèlement l'une à l'autre dans les découpes ouvertes dans le bord des paquets de supports de barre (18), avec le cintrage des premiers supports de barre (14) on cintre les autres supports de barre (16) et on coince de ce fait également les barres profilées (12) au moyen des découpes des autres supports de barre (16) qui se rétrécissent dans les découpes de ces autres supports de barre (16) et on assemble solidement l'un à l'autre les paquets de supports de barre (18) par leurs deux extrémités bout à bout après le cintrage, on place ensuite l'autre support de barre (16) d'un paquet de supports de barre respectif (18) sans jeu dans un creux de l'anneau d'extrémité concerné (22) et on le soude à l'anneau d'extrémité (22), et on soude le premier support de barre (14) d'un paquet de supports de barre respectif (18) à l'anneau d'extrémité (22) en appui sur la face frontale intérieure (26) de l'anneau d'extrémité concerné (22) dans la région de son bord détourné des barres de support (12).

14. Procédé selon la revendication 13, **caractérisé en ce que** pour la fabrication d'un appareil de tamisage (10) pouvant fonctionner par centrifugation avec des barres profilées (12) insérées sur le bord intérieur des supports de barre (14, 16) on soude l'autre support de barre (16) d'un paquet de supports de barre respectif (18) par un cordon de soudure (28) dans la région du diamètre intérieur de l'anneau d'extrémité concerné (22) et le premier support de barre (14) d'un paquet de supports de barre respectif (18) par un cordon d'étanchéité (30) dans la région de son diamètre extérieur à l'anneau d'extrémité concerné (22).

15. Appareil de tamisage (10), en particulier panier de tamisage, pour un tamis sous pression, fabriqué par un procédé selon au moins une des revendications précédentes.

16. Appareil de tamisage (10), en particulier panier de tamisage, pour un tamis sous pression selon la revendication 15, doté d'une multiplicité de barres profilées (12), qui sont insérées parallèlement l'une à l'autre de façon coincée dans des découpes ouvertes dans le bord de premiers supports de barre en forme de lattes (14) cintrés en anneaux, dont les deux extrémités bout à bout sont solidement assemblées l'une à l'autre, **caractérisé en ce qu'**en plus des premiers supports de barre (14) il est prévu respectivement au moins un autre support de barre en forme de latte (16) cintré en un anneau avec des découpes ouvertes dans le bord, dont la hauteur radiale (h₁₆) est inférieure à la hauteur radiale (h₁₄) du premier support de barre respectif, les premiers supports de barre (14) et les autres supports de barre (16) associés à ceux-ci forment des paquets de supports de barre (18) composés respectivement d'un premier support de barre (14) et d'au moins un autre support de barre (16) directement adjacent dans la direction axiale (A) de l'appareil de tamisage (10) ou prévu à une certaine distance, les barres profilées (12) sont insérées parallèlement l'une à l'autre de façon coincée dans les découpes ouvertes dans le bord des paquets de supports de barre, dans lequel les barres profilées (12) sont également coincées dans les découpes des autres supports de barre, et les paquets de supports de barre cintrés (18) sont solidement assemblés l'un à l'autre à leurs deux extrémités bout à bout.

17. Appareil de tamisage (10), en particulier panier de tamisage, pour un tamis sous pression utilisable dans l'industrie de la fabrication du papier, selon la revendication 16, doté d'une multiplicité de barres profilées (12), qui sont insérées parallèlement l'une à l'autre de façon coincée dans des découpes ouvertes dans le bord de premiers supports de barre en forme de lattes (14) cintrés en anneaux, dont les deux extrémités bout à bout sont solidement assemblées l'une à l'autre, **caractérisé en ce qu'**en plus de deux premiers supports de barre (14) prévus dans la région d'un anneau d'extrémité frontal respectif (22) de l'appareil de tamisage (10), il est respectivement prévu un autre support de barre (16) cintré en un anneau avec des découpes ouvertes dans le bord, dont la hauteur radiale (h₁₆) est inférieure à la hauteur (h₁₄) du premier support de barre respectif (14), les premiers supports de barre concernés (14) et les autres supports de barre (16) associés à ceux-ci forment des paquets de supports de barre (18) respectivement composés d'un premier support de barre (14) et d'un autre support de barre (16) directement adjacent dans la direction axiale (A) ou prévu à une certaine distance et disposé entre le premier support de barre (14) et l'anneau d'extrémité concerné (22), les barres profilées (12) sont insérées parallèlement l'une à l'autre de façon coincée dans les découpes ouvertes dans le bord des paquets de supports de barre (18), dans lequel les barres profilées (12) sont également coincées dans les découpes étroites des autres supports de barre (16) cintrés en anneaux, les paquets de supports de barre cintrés (18) sont solidement assemblés l'un à l'autre à leurs deux extrémités bout à bout, l'autre support de barre (16) d'un paquet de supports de barre respectif (18) est placé sans jeu dans un creux (24) de l'anneau d'extrémité concerné (22) et il est soudé à l'anneau d'extrémité (22), et le premier support de barre (14) d'un paquet de supports de barre respectif (18) s'applique sur la face frontale intérieure (26) de l'anneau d'extrémité concerné (22) et il est soudé à l'anneau d'extrémité (22) dans la région de son bord détourné des barres de support (12).

18. Appareil de tamisage selon la revendication 17, **caractérisé en ce que** les barres profilées (12) sont insérées sur le bord intérieur des supports de barre (14, 16) et l'autre support de barre (16) d'un paquet de supports de barre respectif (18) est soudé à l'anneau d'extrémité concerné (22) par un cordon de soudure (28) dans la région du diamètre intérieur de l'anneau d'extrémité concerné (22) et le premier support de barre (14) d'un paquet de supports de barre respectif est soudé à l'anneau d'extrémité concerné (22) par un cordon d'étanchéité (30) dans la région de son diamètre extérieur.
